Europäisches Patentamt

European Patent Office

Office européen des brevets

(19)

(11) Veröffentlichungsnummer: **0 271 033 B1**

(12) **EUROPÄISCHE PATENTSCHRIFT**

(45) Veröffentlichungstag der Patentschrift: **22.04.92**

(21) Anmeldenummer: **87118007.1**

(22) Anmeldetag: **05.12.87**

(51) Int. Cl.5: **C09J 133/00**, C08L 33/06,
//(C08L33/06,79:02)

(54) **Klebstoffe für Verklebungen mit erhöhter Wärmestandfestigkeit.**

(30) Priorität: **12.12.86 DE 3642485**

(43) Veröffentlichungstag der Anmeldung:
**15.06.88 Patentblatt 88/24**

(45) Bekanntmachung des Hinweises auf die
Patenterteilung:
**22.04.92 Patentblatt 92/17**

(84) Benannte Vertragsstaaten:
**AT BE CH DE FR GB IT LI NL SE**

(56) Entgegenhaltungen:
**US-A- 3 786 113**

**CHEMICAL ABSTRACTS, Band 77, Nr. 20, 13
November 1972, Seite 68, Zusammenfassung
Nr. 128016s, Columbus, Ohio, US; & JP-B-72
03 718 (DAINIPPON INK & CHEMICALS)
01-02-1972**

(73) Patentinhaber: **BASF Aktiengesellschaft
Carl-Bosch-Strasse 38
W-6700 Ludwigshafen(DE)**

(72) Erfinder: **Aydin, Oral, Dr.
Sophienstrasse 14
W-6800 Mannheim 1(DE)**
Erfinder: **Kast, Hans, Dr.
Neue Heimat 28
W-6800 Mannheim 31(DE)**

**Beschreibung**

Die Erfindung betrifft Klebstoffe auf Basis von wäßrigen Polymerdispersionen und organischen Polyaminoverbindungen für Verklebungen mit erhöhter Wärmestandfestigkeit.

Es ist bekannt, daß man Verklebungen mit guter Wärmestandfestigkeit aus wäßrigen Dispersionen von Polymeren, die Methylolgruppen enthalten, herstellen kann. Die Klebefilme müssen aber zur Erzielung guter Wärmestandfestigkeiten bei Temperaturen über 130°C längere Zeit vernetzt werden. Mit derartigen Klebstoffen können somit Verklebungen von temperaturempfindlichen Kunststoff-Folien mit anderen Substraten nicht durchgeführt werden.

Aus der JA-A-58098-373 sind Zweikomponentenkleber bekannt, die erstens ein Gemisch aus einem Copolymerisat eines Umsetzungsproduktes eines (Meth)acrylsäureesters, der eine tertiäre Aminogruppe hat, mit einem Epichlorhydrin und einem (Co)polymerisat des Isobornyl(meth)acrylats und zweitens ein Härtungsmittel auf Basis einer Polyethylenimin-Lösung enthält. Derartige Zweikomponentenkleber können zum Verkleben von Inneneinrichtungen im Automobilbau eingesetzt werden und zeigen gute Wärmestandfähigkeit. Auch aus der US-PS 4 532 273 sind Zweikomponentenkleber bekannt, die erstens eine wäßrige Dispersion eines (Co)polymeren aus einem (Meth)acrylsäureester, der eine tertiäre Aminogruppe enthält, mit einem Epihalogenhydrin, zweitens ein klebrig machendes Harz und drittens eine Epoxyverbindungen sowie viertens ein Härtungsmittel mit einer Aminogruppe enthält. Als Härtungsmittel kommen dabei z.B. Polyamid-Harze; Polyamid-Polyamin-Harze und Imidazol-Verbindungen in Betracht. Diese, aus mindestens 2 Komponenten hergestellten Klebstoffe sind jedoch nicht lagerstabil und müssen somit kurz nach ihrer Herstellung verarbeitet werden, was in der Praxis von Nachteil ist.

Zweikomponenten-Polyurethanklebstoffe, die organische Lösungsmittel enthalten, ergeben zwar gute Verklebungen, doch führen die organischen Lösungsmittel zu Umweltbelastungen.

Der vorliegenden Erfindung liegt nun die Aufgabe zugrunde, Klebstoffe bereitzustellen, die mindestens 6 Monate lagerstabil sind, bei Raumtemperatur oder wenig erhöhter Temperatur verarbeitet werden können und die Verklebungen ergeben, die auch bei erhöhten Temperaturen gute Kohäsion und Adhäsion aufweisen.

Es wurde gefunden, daß Klebstoffe, die einen Gehalt an

(A) einer wäßrigen Dispersion eines Copolymerisats aus

50 bis 98,5 % seines Gewichtes (Meth)acrylsäureestern 1 bis 12 C-Atome enthaltender Alkanole,

0,5 bis 10 % seines Gewichtes (Meth)acrylnitril,

0,5 bis 4 % seines Gewichtes einer $\alpha,\beta$-monoolefinisch ungesättigten Carbonsäure,

0 bis 10 % seines Gewichtes an Vinylestern 2 bis 4 C-Atome enthaltender gesättigter Carbonsäuren, Styrol und/oder Butadien und

0 bis 5 % seines Gewichtes Hydroxyalkyl(meth)acrylaten mit 2 bis 8 C-Atomen in den Alkylgruppen,

(B) einer organischen Polyaminoverbindung eines Molekulargewichts zwischen 250 und 15.000 und einer Aminofunktionalität über 5 aufweisen

lagerstabil sind, sich bei Raumtemperaturen oder wenig erhöhter Temperatur auf die zu verklebenden Flächen auftragen lassen und Verklebungen ergeben, die erhöhte Wärmestandfestigkeit aufweisen.

Die wäßrigen Copolymer-Dispersionen (A) können in an sich üblicher Weise durch Emulsions-Copolymerisation der Monomeren in wäßrigem Medium unter Verwendung der üblichen Dispergierhilfsmittel und wasserlöslichen, radikalbildenden Polymerisationskatalysatoren hergestellt sein.

Als (Meth)acrylsäureester kommen vor allem Methylacrylat, Ethylacrylat, n-Butylacrylat und -methacrylat, Isobutyl-acrylat und -methacrylat, 2-Ethylhexylacrylat und -methacrylat sowie ferner n-Hexylacrylat, n-Octylacrylat und -methacrylat, Decylacrylat und Dodecylacrylat in Frage. Geeignete $\alpha,\beta$-monoolefinisch ungesättigte Carbonsäuren sind besonders 2 bis 5 C-Atome enthaltende Mono- und Dicarbonsäuren, wie Acrylsäure, Methacrylsäure, Fumarsäure, Maleinsäure, Itaconsäure sowie ferner Crotonsäure. Geeignete Vinylester sind besonders Vinylacetat und Vinylpropionat, sowie ferner Vinylbutyrat. Als Hydroxyalkyl-(meth)acrylate kommen besonders 2-Hydroxyethylacrylat und -methacrylat, 4-Hydroxybutylacrylat und -methacrylat, 6-Hydroxyhexylacrylat und -methacrylat sowie 8-Hydroxyoctylacrylat und -methacrylat in Frage.

Der Feststoffgehalt der wäßrigen Dispersionen (A) liegt im allgemeinen im Bereich von 30 bis 70, insbesondere von 50 bis 65 Gew.-%, bezogen auf die Dispersion. Als Dispergiermittel können bei der Herstellung der Dispersionen (A) durch Emulsionspolymerisation die üblichen anionischen und gegebenenfalls nichtionischen Emulgatoren in den üblichen Mengen, die zwischen 0,5 und 3, insbesondere zwischen 1 und 2 Gew.-%, bezogen auf Monomeren, liegen, eingesetzt werden. Als Beispiele hierfür seien Natriumlaurylsulfat, Natriumdodecylbenzolsulfonat und die Alkalisalze von sauren Schwefelsäureestern von Alkylenoxiden an Octyl-oder Nonylphenol, die meist 5 bis 50 Mol, insbesondere Ethylenoxid angelagert enthalten, sowie Ethylenoxid-Addukte an Fettalkohole mit meist 5 bis 50 Mol angelagertem Ethylenoxid genannt. Als wasserlösliche Polymerisationsinitiatoren kommen vor allem Peroxydisulfate, wie Kaliumperoxydisulfat und Redox-Systeme, wie Wasserstoffperoxid/Natrium-Formaldehydsulfoxylat in Betracht, und die Emulsionspolymerisation kann im allgemeinen bei Temperaturen von 30 bis 150°C, insbesondere bei 50 bis 90°C erfolgen. Zur Herstellung der Dispersionen (A) ist es zudem vorteilhaft, in einem pH-Bereich von 3 bis 9 zu arbeiten, damit die Dispersionen gegenüber pH-Änderungen hinreichend stabil werden. Die wäßrigen Polymer-Dispersionen (A) enthalten vorzugsweise sowohl anionische als auch nichtionische Emulgatoren der genannten Art.

Als organische Polyaminoverbindungen (B) kommen vor allem Polyethylenimine mit Molekulargewichten von 250 bis 15.000, insbesondere von 250 bis 10.000, in Betracht. Derartige Polyethylenimine haben eine Aminofunktionalität über 5. Geeignet sind ferner Melaminderivate wie N,N′,N″-Tris-(2-aminoethyl)-melamin und N,N′,N″-Tris-(6-aminohexyl)-melamin. Derartige Polyaminoverbindungen werden, soweit sie wasserunlöslich sind, vorzugsweise in Form von Lösungen in organischen Lösungsmitteln, wie Aceton und Toluol oder als wäßrige Lösungen der Protonierungsprodukte, die z.B. durch Umsetzen mit Kohlensäure oder mit Ammoniumhydrogencarbonat erhalten werden können, zu den wäßrigen Dispersionen (A) zugesetzt. Die Molekulargewichte der Polyaminoverbindungen können in üblicher Weise z.B. nach der Methode der Lichtstreuung ermittelt werden. Bei den erfindungsgemäßen Einkomponentenklebstoffen kann der Anteil an Polyaminoverbindungen (B) in weiten Grenzen variiert werden. Bezogen auf den Feststoffgehalt der Dispersion (A) liegt er im allgemeinen bei 0,01 bis 3, vorzugsweise bei 0,01 bis 1,5 Gew.-%. Verwendet man als

Härtungsmittel zusammen mit den wäßrigen Polymer-Dispersionen (A) niedermolekulare Polyaminoverbindungen, wie 3-(2-Aminoethyl)-aminopropylamin, Dipropylentriamin, N,N′-Bis-(3-aminopropyl)-ethylendiamin oder 4,9-Dioxadodecan-1,12-diamin, 4,7,10-Trioxatridecan-1,13-diamin, so werden keine Verklebungen mit verbesserter Wärmestandfestigkeit erhalten. Andererseits erhält man, wenn man z.B. Polyethylenimine eines Molekulargewichts über 15.000, z.B. von 25.000 oder 30.000 einsetzt, zusammen mit den wäßrigen Polymer-Dispersionen (A) keine lagerstabilen Klebstoffe, da in diesem Fall nach dem Vermischen eine Koagulation oder Gelierung der Gemische eintritt.

Der Feststoffgehalt der erfindungsgemäßen Einkomponentenklebstoffe liegt im allgemeinen zwischen 30 und 70, vorzugsweise zwischen 50 und 65 Gew.-%, und der pH-Wert im allgemeinen zwischen 4 und 9. Zur Verbesserung der Klebeeigenschaften können den erfindungsgemäßen Einkomponentenklebstoffen andere, auf dem Klebstoffgebiet übliche Harze, z.B. Kohlenwasserstoffharze, Esterharze, natürliche Harze und Kolophoniumderivate sowie Füllstoffe, z.B. Kreide und Bariumsulfat, ferner Weichmacher und/oder Filmbildehilfsmittel zugesetzt werden. Auch die dabei erhaltenen Formulierungen sind lagerstabil und eignen sich besonders zur Herstellung von Verklebungen mit guter Wärmestandfestigkeit, insbesondere zur Verklebung von Kunststoff-Folien mit Laminaten und/oder Metallen sowie mit Holz und gegebenenfalls lackierten Papieren und Kartons.

Die in den folgenden Beispielen angegebenen Teile und Prozente beziehen sich, soweit nicht anders angegeben, auf das Gewicht.

Herstellung der Polymerdispersionen 1 bis 10

In einem Reaktionsgefäß mit Rührer und Zulaufgefäßen werden 180 Teile Wasser, 0,8 Teile Kaliumperoxidsulfat, 0,06 Teile des Natriumsalzes eines sulfatierten Umsetzungsproduktes von p-Isooctylphenol mit 25 Mol Ethylenoxid und 0,06 Teile eines Umsetzungsproduktes von p-Isooctylphenol mit 25 Mol Ethylenoxid und 6,5 Teile der jeweiligen Monomermischung (entsprechend den in Tabelle 1 angegebenen Zusammensetzungen) auf 85°C erhitzt. Nach 15 Minuten beginnt man den über 2 Stunden gleichmäßigen Zulauf einer Emulsion aus 100 Teilen Wasser, jeweils 6,0 Teilen der zuvor angegebenen Emulgatoren und 650 Teilen der Monomermischung. Gleichzeitig werden in einem separaten Zulauf eine Lösung von 2,5 Teilen Kaliumperoxidsulfat in 80 Teilen Wasser zugegeben. Anschließend wird der Inhalt des Reaktionsgefäßes noch 1 Stunde bei 85°C gehalten.

Nach dem Abkühlen wird der pH-Wert mit Ammoniakwasser auf 5 gestellt; dabei ist es zur Verbesserung der Stabilität der Dispersionen (Nr. 4 und 6) von Vorteil, nochmals bis zu 6 Teile Emulgator zuzugeben.

Tabelle 1

| Dispersion | Monomerzusammensetzung Gew.-% | | | | | FG Gew.% | pH |
|---|---|---|---|---|---|---|---|
| 1 | 89 BA; | 5 VAc; | 3 AN; | 2 HEA; | 1 AS | 60,1 | 4,8 |
| 2 | 88 EHA; | 9 AN; | 3 AS; | | | 50,0 | 4,5 |
| 3 | 60 BA; | 30 MMA; | 5 VAc; | 3 AN; | 2 AS | 64,8 | 4,8 |
| 4 | 76 BA; | 17 MMA; | 5 VAc; | 2 AS | | 65,2 | 5,2 |
| 5 | 76 BA; | 20 MMA; | 2 HEA; | 2 AS | | 65,3 | 5,2 |
| 6 | 97 BA; | 1 AS | 2 HEA | | | 65,6 | 5,7 |
| 7 | 97 BA; | 3 AS | | | | 50,0 | 5,2 |
| 8 | 76 BA; | 10 AN; | 10 VAc; | 3 HEMA; | 1 AS | 60,2 | 5,4 |
| 9 | 88 BA; | 5 AN; | 5 VAc; | 1 AS; | 1 DAAM | 55,6 | 5,0 |
| 10 | 97 BA; | 2 HEMA; | 1 AS | | | 60,7 | 5,8 |

In der Tabelle bedeuten:

FG:    Trockengehalt der Dispersionen

BA:    Butylacrylat

EHA:   Ethylhexylacrylat

MMA:   Methylmethacrylat

AN:    Acrylnitril

VAc:   Vinylacetat

HEA:   Hydroxyethylacrylat

HEMA: Hydroxyethylmethylacrylat

AS:    Acrylsäure

DAAM: Diacetonacrylamid

Herstellung und Prüfung von Verklebungen

Beispiele 1 bis 5

Dispersion 1 wird mit den in Tabelle 2 angegebenen Polyamino-Verbindungen (1 %, bezogen auf den Feststoffgehalt der Dispersion) versetzt und auf Silikonpapier 100 $\mu$m dick aufgebracht. Nach 3 Minuten Ablüften wird in die noch feuchte Klebstoffschicht ein Baumwollgewebe eingelegt und die Verklebung bei Raumtemperatur getrocknet. 2 cm breite Streifen der erhaltenen Gebilde werden nach Entfernen des Siliconpapiers auf ein mit Grundierlack versehendes Blech mit leichtem Druck geklebt. Nach 2 Tagen Lagern bei Raumtemperatur wird die Verklebung einer Wärmestandfestigkeitsprüfung in einem Umluftschrank unter folgenden Bedingungen unterworfen:
Belastung der Baumwollgewebe: bei 90°C 50 g/2 cm Temperaturbelastung: jeweils 10 Minuten bei den angegebenen Temperaturen Aufheizrate zwischen den Temperaturbereichen: 1°C/min Gemessen wird: Trennstrecke in mm
Die Ergebnisse sind in der folgenden Tabelle 2 zusammengestellt.

Tabelle 2

Wärmestandfestigkeitsprüfung mit der Dispersion 1 und verschiedenen Polyaminoverbindungen

| Beispiel | Zusatz von (jeweils 1 %) | 50 | 60 | 80 | 100 | 120 | 140 | 150 °C |
|---|---|---|---|---|---|---|---|---|
| | | | | Trennstrecke in mm | | | | |
| 1 | Polyethylenimin Mw 800 | - | - | - | - | - | - | 2 |
| 2 | Polyethylenimin Mw 2000 | - | - | - | - | - | - | 1 |
| 3 | Polyethylenimin Mw 800 | - | - | - | - | - | - | 1 |
| 4 | Triaminoethylmelamin aus $NH_4H\ CO_3$-Lösung | - | - | - | - | - | 2 | 2 |
| 5 | Triaminohexylmelamin aus $NH_4H\ CO_3$-Lösung | - | - | - | - | - | 1 | 1 |

Vergleichsversuche

| | | 50 | 60 | 80 | 100 | 120 | 140 | 150 °C |
|---|---|---|---|---|---|---|---|---|
| a) | ohne | - | 2 | 2 | 9 | 12 | 14 | 14 |
| b) | 1,2-Diaminopropan | - | - | 3 | 3 | 15 | 18 | 18 |
| c) | 4,7,10-Trioxa-tridecan-1,13-diamin | | | 4 | 4 | 8 | 14 | 18 |
| d) | 3-(2-Aminoethyl)-amino-propylamin | | | 1 | 1 | 14 | 17 | 17 |
| e) | N,N'-Bis(3-aminopropyl)-ethylendiamin | | | 1 | 1 | 14 | 22 | 24 |

Beispiele 6 bis 10

Die mit den Polyaminoverbindungen versetzte Dispersion 2 wird auf eine durch Corona-Entladung vorbehandelte Polypropylenfolie 25 µm dick (trocken) aufgebracht und bei Raumtemperatur getrocknet. 5 cm breite Streifen der mit dem Klebstoff versehenen Folie werden durch Anrollen eines 2,5 kg schweren Gewichtes auf eine Hochglanzstahlplatte geklebt. Nach einer Lagerzeit von einem Tag bei Raumtemperatur werden die Wärmestandfestigkeiten der Verklebungen bei 90°C im Umlufttrockenschrank mit einer Belastung mit 100 g bei einem Winkel von 90° geprüft. Die abgelaufene Strecke in mm/Stunde wird ermittelt.

Tabelle 3

| Beispiel | Zusatz | | Menge in % | abgelaufene Strecke in mm/Stunde |
|---|---|---|---|---|
| 6 | Polyethylenimin | Mw 800 | 1 | 1 |
| 7 | " | Mw 800 | 0,5 | 1 |
| 8 | " | Mw 800 | 0,1 | 7 |
| 9 | " | Mw 2000 | 1 | 0 |
| 10 | " | Mw 4700 | 1 | 0 |

Vergleichsversuche

| f | ohne | | - | 58 |
|---|---|---|---|---|
| g | 1,2-Diaminopropan | | 1 | 90 |
| h | 3-(2-Aminoethyl)amino- propylamin | | 1 | 45 |
| i | N,N"-Bis(3-aminopropyl) ethylendiamin | | 1 | 64 |

Beispiele 10 bis 15

Die Dispersionen 3 bis 8 werden mit Polyethylenimin Mw = 800 (0,2 %, bezogen auf den Feststoffgehalt der Dispersion) versetzt. Die Mischungen werden auf eine Preßspanplatte (etwa 100 g naß/m²) aufgebracht und in die noch nasse Klebstoffschicht ein Baumwollgewebe (Segeltuch) eingelegt. Nach 2-tägiger Lagerung der Verklebungen werden deren Wärmestandfestigkeit in einem Umlufttrockenschrank untersucht.

Wärmestandfestigkeit: bei 90°C, bei Winkel 90°,
mit einer Belastung von 500 g/5 cm

Gemessen wird die unter Wärmebelastung abgetrennte Strecke in mm/Stunde.

Um die Wirkung der Polyaminoverbindung bei den verschiedenen Dispersionen vergleichbar zu machen, wird die Ablaufstrecke der Versuche mit Polyaminoverbindung prozentual auf reine Dispersion bezogen, wobei die Ablaufstrecke der reinen Dispersion gleich 100 % ist.

Tabelle 4

| Beispiel | Dispersion | Ablaufstrecke nach Zusatz von Polyethylenimin |
|---|---|---|
| 11 | 3 ) | 60 % |
| 12 | 4 ) | 0    kein Ablauf |
| 13 | 5 ) + Polyethylenimin | 65 % |
| 14 | 6 ) | 80 % |
| 15 | 7 ) | 50 % |
| 16 | 8 ) | 40 % |

Beispiel 17

Dispersion 9) wird mit 2 % (bezogen auf den Feststoffgehalt der Dispersion) Polyethylenimin (Mw = 800) versetzt. Die so erhaltene Mischung wird auf eine doppelgeschälte, extrudierte Polystyrol-Platte in einer Menge von 80 g/cm² (fest) aufgebracht und etwa 6 Minuten bei 80°C getrocknet. Auf die noch warme Polystryol-Platte wird eine PVC-Schaumfolie gelegt und kurz angedrückt.

Die Wärmestandfestigkeit der Verklebung wird dann in einem Umlaufofen bei einer Temperatur von 90 °C mit einer Schälbelastung 200 g/auf 5 cm Prüfstreifenbreite bei einem Winkel von 180 ° geprüft. Die Länge der Trennstrecke wird in Abhängigkeit der Belastungsdauer gemessen und ergibt sich zu 0,3 cm/Stunde. Demgegenüber beträgt zum Vergleich die Trennstrecke für eine Verklebung mit Dispersion 9 allein 21 cm/Stunde.

Beispiele 18 bis 21

Dispersion 10 wird mit toluolischen Lösungen verschiedener Harze in einer Menge von 10 % (fest), bezogen auf den Feststoffgehalt der Dispersion, versetzt. Zu den so erhaltenen, harzhaltigen Dispersiaonen gibt man gegebenenfalls zusätzlich 0,5 (bezogen auf Feststoff der Dispersion + Harz) Polyethylenimin (Mw = 2000) versetzt.

Die Klebstoffmischungen werden (mit und ohne Polyethyleniminzusatz) auf ihre Wärmestandfestigkeit bei der Verklebung Polystyrol/Polyvinylchlorid, wie bei Beispiel 17 angegeben, geprüft. Zum Vergleich wird in der folgenden Tabelle 5 die Trennstrecke auf die polyethyleniminfreien Verklebungen bezogen, die gleich 100 % gesetzt sind und prozentual angegeben.

Tabelle 5

| Beispiel | Harz | Polyethylenimin | Trennstrecke in %, bezogen auf Polyethyleniminfreie Verklebung |
|---|---|---|---|
| 18 | handelsübliches Harnstoff-Aldehydharz | 0,5 % | 70 |
| 19 | handelsübliches Kolophonium-Harz | 0,5 % | 50 |
| 20 | handelsübliches Styrol/$\alpha$-methylstyrol-Harz | 0,5 % | 65 |
| 21 | Dihydroabietylphthalat | 0,5 % | 60 |

**Patentansprüche**

1. Einkomponenten-Klebstoffe für Verklebungen mit erhöhter Wärmestandfestigkeit, gekennzeichnet durch einen Gehalt an
   (A) einer wäßrigen Dispersion eines Copolymerisates aus
   50 bis 98,5 % seines Gewichtes (Meth)acrylsäureestern 1 bis 12 C-Atome enthaltender Alkanole,
   0,5 bis 10 % seines Gewichtes (Meth)Acrylnitril,
   0,5 bis 4 % seines Gewichtes einer $\alpha,\beta$-monoolefinisch ungesättigten Carbonsäure und/oder (Meth)-acrylamidoglykolsäure
   0 bis 10 % seines Gewichtes an Vinylestern 2 bis 4 C-Atome enthaltenden gesättigten Carbonsäuren, Styrol und/oder Butadien und
   0 bis 5 % seines Gewichts Hydroxyalkyl(meth)acrylaten mit 2 bis 8 C-Atomen in den Alkylgruppen und/oder Amide von 3 bis 5 C-Atome enthaltenden Carbonsäuren und/oder der N-Hydroxyalkyl und/oder Alkoxyalkylderivate
   einer Glastemperatur bis +40 °C und
   (B) einer organischen Polyaminoverbindung eines Molekulargewichts zwischen 250 und 15000 und einer Aminofunktionalität über 5.

2. Einkomponenten-Klebstoffe gemäß Anspruch 1, dadurch gekennzeichnet, daß das Gewichtsverhältnis von Copolymerisat zu Polyaminoverbindung zwischen 100 zu 0,01 bis 100 zu 3 liegt.

**Claims**

1. A one-component adhesive for adhesive bonds having increased high-temperature strength, which contains
   (A) an aqueous dispersion of a copolymer of from 50 to 98.5%, based on the weight of the copolymer, of (meth)acrylates of alkanols of 1 to 12 carbon atoms, from 0.5 to 10%, based on the weight of the copolymer, of (meth)acrylonitrile, from 0.5 to 4%, based on the weight of the copolymer, of an $\alpha,\beta$-monoolefinically unsaturated carboxylic acid and/or (meth)acrylamidoglycollic acid, from 0 to 10%, based on the weight of the copolymer, of vinyl esters of saturated carboxylic acids of 2 to 4 carbon atoms, styrene and/or butadiene and from 0 to 5%, based on the weight of the copolymer, of hydroxyalkyl (meth)acrylates where alkyl is of 2 to 8 carbon atoms and/or amides of carboxylic acids of 3 to 5 carbon atoms and/or the N-hydroxyalkyl and/or alkoxyalkyl derivatives, having a glass transition temperature of up to +40°C, and

(B) an organic polyamino compound having a molecular weight of from 250 to 15,000 and an amino functionality greater than 5.

2. A one-component adhesive as claimed in claim 1, wherein the weight ratio of copolymer to polyamino compound is from 100:0.01 to 100:3.

**Revendications**

1. Colles à un seul composant pour des collages à haute résistance à la chaleur, caractérisées en ce qu'elles contiennent

(A) une dispersion aqueuse d'un copolymère de

50 à 98,5% de son poids d'esters d'acide (méth)acrylique et d'alcanols renfermant de 1 à 12 atomes de carbone,

0,5 à 10% de son poids de (méth)acrylonitrile,

0,5 à 4% de son poids d'un acide carboxylique à insaturation $\alpha,\beta$-monooléfinique et/ou d'acide (méth)acrylamidoglycolique,

0 à 10% de son poids d'esters vinyliques d'acides carboxyliques saturés renfermant de 2 à 4 atomes de carbone, de styrène et/ou de butadiène, et

0 à 5% de son poids de (méth)acrylates d'hydroxyalkyle renfermant de 2 à 8 atomes de carbone dans les groupements alkyle et/ou d'amides d'acides carboxyliques renfermant de 3 à 5 atomes de carbone et/ou de dérivés N-hydroxyalkylés et/ou alcoxyalkylés,

ayant une température de transition vitreuse allant jusqu'à +40°C, et

(B) un composé polyamino organique, ayant un poids moléculaire entre 350 et 15 000 et une fonctionnalité amino de plus de 5.

2. Colles à un seul composant selon la revendication 1, caractérisées en ce que le rapport en poids du copolymère au composé polyamino se situe entre 100:0,01 et 100:3.